# EUROPEAN PATENT SPECIFICATION

(11) **EP 1 568 088 B1**
(45) Date of publication and mention of the grant of the patent: **01.01.2020**
(21) Application number: 03776741.5
(22) Date of filing: 27.11.2003
(51) Int. Cl.: H01M 2/10, H01M 10/052, H01M 10/06

(54) **CASING FOR AN ENERGY STORAGE DEVICE**
GEHÄUSE FÜR EINE ENERGIESPEICHERVORRICHTUNG
BOITIER POUR UN DISPOSITIF DE STOCKAGE D'ENERGIE

(30) Priority: 27.11.2002 US 429377 P
(43) Date of publication of application: 31.08.2005
(73) Proprietor: Blue Solutions Canada Inc., Boucherville, Quebéc J4B7Z7 (CA); IPL INC., St-Damien Bellechasse, Québec (CA)
(72) Inventor: SAVARIA, Jean-François, Boucherville, Quebec J4B 8M1 (CA); BURNS, Martin, Chambly, Quebec J3L 5M7 (CA); GIGUERE, Stéphane, Ste-Marie, Quebec G6E 3K1 (CA); LANOUE, Michel, Pintendre, Quebec G6C 1L2 (CA); BEGIN, Phillipe, Pintendre, Quebec G6C 1L1 (CA)
(74) Representative: Santarelli
(86) International application number: PCT/CA2003/001861
(87) International publication number: WO 2004/049470

(56) References cited:
- WO-A-96/23217
- WO-A-98/44574
- JP-A- 62 115 647
- JP-A- 1992 059 840
- US-A- 5 084 313

## Description

### FIELD OF THE INVENTION

The present invention generally relates to the field of energy storage devices, such as batteries and electrochemical generators. More specifically, the invention relates to a casing for an energy storage device, where this casing serves to protect the energy storage device from humidity, oxygen and other harmful environmental factors.

### BACKGROUND OF THE INVENTION

Storage batteries, also known as energy storage devices, electric cells and electrochemical generators, are well known to convert chemical energy into electrical energy. Typically, a storage battery is formed of two or more electrochemical cells, connected in series or in parallel. Each cell consists of at least one pair of positive and negative electrodes connected by a circuit, as well as an electrolyte in liquid, paste or solid form. The electrolyte is an ionic conductor, such that one of the pair of electrodes will react, releasing electrons, while the other will accept electrons. Thus, when the electrodes are connected to a device to be powered, also referred to as a load, the electrodes chemically react with the electrolyte to produce a flow of electrons, and thus an electrical current, through the circuit.

Of importance is the fact that storage batteries are rechargeable, through a reversal of the normal chemical reaction. More specifically, once a storage battery has been discharged, its chemicals can be reconstituted by passing an electric current through the battery in the opposite direction to that of the normal cell operation.

A popular and well-known type of storage battery is the lead-acid battery, which consists of three or six cells connected in series, in which the electrodes are made of lead and lead dioxide and the electrolyte is made of acid. This type of storage battery is commonly used in automobiles, trucks, aircraft and other vehicles. Its main advantage is the fact that it can deliver a strong current of electricity for starting an engine; however, the lead-acid battery runs down quickly and is heavy, bulky, and susceptible to rapid corrosion.

Lithium-Ion and Lithium polymer rechargeable batteries, which are manufactured from laminates of polymer electrolytes and sheet-like anodes and cathodes, display many advantages over other types of batteries. These advantages include a lower overall battery weight, a high power density, a high specific energy and a longer service life. However, lithium and lithium in metallic form are highly reactive to the environment, more specifically to humidity, and therefore must be protected from the external environment in order to avoid any undesired reaction.

In light of the foregoing, it is important that storage batteries meet certain manufacturing and tolerance requirements in order to ensure proper and efficient operation, as well as to extend the useful lifetime of the battery. In this regard, storage batteries typically include a protective casing in which the electrochemical cells are sealed. This casing serves to protect the cells from any external humidity and oxygen, which is important since electrochemical cells are extremely sensitive to oxidation. The mechanical strength of the casing also protects the electrochemical cells inside against shocks, impacts and abusive treatments.

The casing of a storage battery must thus be sufficiently impermeable to water and oxygen to adequately protect the cells from these detrimental environmental factors, and must also be characterized by a certain level of rigidity. The latter is due to the fact that, during charging and discharging of the battery, the volume of the electrochemical cells inside the casing increases and decreases thus applying pressure on the walls of the casing. Some outgassing or degassing of the cells may also occur through ageing of the electrochemical cells thus increasing the internal pressure applied on the walls of the casing.

Traditionally, the casing of a storage battery consists of a sealed metallic box that is welded shut. Unfortunately, the manufacture of the metallic box is expensive and very labor intensive, due to the required welding operations. The metallic box is typically made of aluminum, in order to keep the weight of the casing as low as possible; however, the welded aluminum casing remains heavy, which is a disadvantage, especially in the electrical vehicle and hybrid electrical vehicle industries.

Against this background, it clearly appears that a need exists in the industry for an improved casing for an energy storage device. Document JP1992-059840 discloses a casing for an energy storage device, comprising a rigidified molded structural shell and an inner lining impervious to oxygen and humidity.

### SUMMARY OF THE INVENTION

According to a broad aspect, the invention provides an energy storage device casing for an energy storage device, comprising:
a) a rigidified molded structural shell defining a void area suitable for containing an energy storage device, said structural shell having an outer surface and an inner surface; and
b) an inner lining substantially impervious to oxygen and humidity, characterized in that said inner lining includes a laminate comprising a layer of synthetic material and a layer of metallic material joined onto said inner surface of said rigidified molded structural shell.

The inner lining may comprise a laminate of at least two layers of materials, either two or more layers of synthetic materials, a layer of synthetic material and a layer of metallic foil, or combinations thereof.

In a specific embodiment, the structural shell is made of reinforced plastic or reinforced polymer material. The reinforcement may be either by addition of strengthening additives like carbon or glass fillers, by reinforcement ribs incorporated into the molding pattern of the plastic material, or reinforcement with a plurality of discrete metallic portions embedded into the plastic or polymer material. The discrete metallic portions and the plastic or polymer material may be molded together or the discrete metallic portions may be embedded in or on the surface of the plastic or polymer material. The plurality of discrete metallic portions may be joined to the plastic or polymer material by a plurality of fasteners, each fastener including a recess formed on one of the discrete metallic portion or the plastic or polymer material and a mating projection formed on the other of the discrete metallic portion and the plastic or polymer material. In a specific embodiment, each fastener includes a recess and a mating projection, where the recess of each fastener is formed on the discrete metallic portion, while the mating projection is formed in the plastic or polymer material. The projection is realized when plastic or polymer material in fluid state invades the recess formed on the discrete metallic portion.

The structural shell may include different types of fasteners. In a first type, the fastener recess is defined by an aperture or perforation formed in the discrete metallic portion of the shell. In a second type, the fastener recess is defined by a gap between the discrete metallic portions. In a third type, the fastener recess is defined by an elongated groove formed in a discrete metallic portion of the structural shell. In all types of fasteners, the mating projection of the fastener is formed by the plastic material of the structural shell, where this projection engages and at least partially fills the gap, rib or aperture in the discrete metallic portion. The reverse arrangement is also possible, where the projection of the fastener is formed on the discrete metallic portions and, during molding of the plastic material, the projection realizes the recess in the plastic portion of the structural shell.

The casing generally includes an aperture opening into the void area for receiving the energy storage device, and an end cover mounted to the structural shell for closing the aperture.

In a specific non-limiting example of implementation, the structural shell is a high strength molded plastic shell having reinforcement ribs incorporated thereto, wherein the interior of the structural shell has a smooth surface onto which is secured a substantially impervious multi-layer laminate. Numerous variations in the rib design are possible to obtain the structural integrity desired. Preferably the plastic structural shell is molded over the substantially impervious multi-layer laminate that is positioned onto the inner core of the mold, the mold is closed and the plastic material is injected into the mold.

In another specific non-limiting example of implementation, the structural shell is a high strength molded plastic shell having metallic reinforcement sections embedded onto the outer surface thereof. The interior of the structural shell has a smooth surface onto which is secured a substantially impervious multi-layer laminate. For this embodiment, the multi-layer laminate is positioned onto the inner core of the mold, the metallic reinforcement sections are positioned on the outer portion of the mold, the mold is closed and the plastic material is injected into the mold. The structural shell can have any number of discrete portions of metallic reinforcement sections, and is not limited to any particular number or shape of discrete portions. Further, the casing, as well as the void area, could be characterized by many different shapes and sizes, and are not limited to any one particular shape or dimension.

Advantageously, the novel casing is more lightweight and less expensive to manufacture than existing designs. Furthermore, this novel casing adequately protects the energy storage device contained therein from harmful environmental factors, such as humidity and oxygen.

In yet another embodiment of the invention, the structural shell is made of composite thermoset material, such as epoxy or urethane, reinforced with either strengthening additives like carbon or glass fillers, ribs incorporated into the structural shell design, or with a plurality of discrete metallic portions embedded into the composite thermoset shell.

### BRIEF DESCRIPTION OF THE DRAWINGS

A detailed description of examples of implementation of the present invention is provided hereinbelow with reference to the following drawings, in which:
Figure 1 is a perspective view of a casing for an energy storage device and its associated end cover, in accordance with a first embodiment of the present invention;
Figure 2 is an exploded view of the casing shown in Figure 1;
Figure 3 is a perspective view of a casing for an energy storage device and its associated end cover, in accordance with a second embodiment of the present invention;
Figure 4 is an exploded view of the casing shown in Figure 3;
Figure 5 is a perspective view of a casing for an energy storage device, in accordance with a third embodiment of the present invention;
Figure 6 is an exploded view of the casing shown in Figure 5;
Figure 7 is a perspective view of a casing for an energy storage device, in accordance with a fourth embodiment of the present invention;
Figure 8 is an exploded view of the casing shown in Figure 7; and
Figure 9 is a perspective view of a variant of reinforcement metallic portions of the casing in accordance with the fourth embodiment of the present invention.

### DETAILED DESCRIPTION

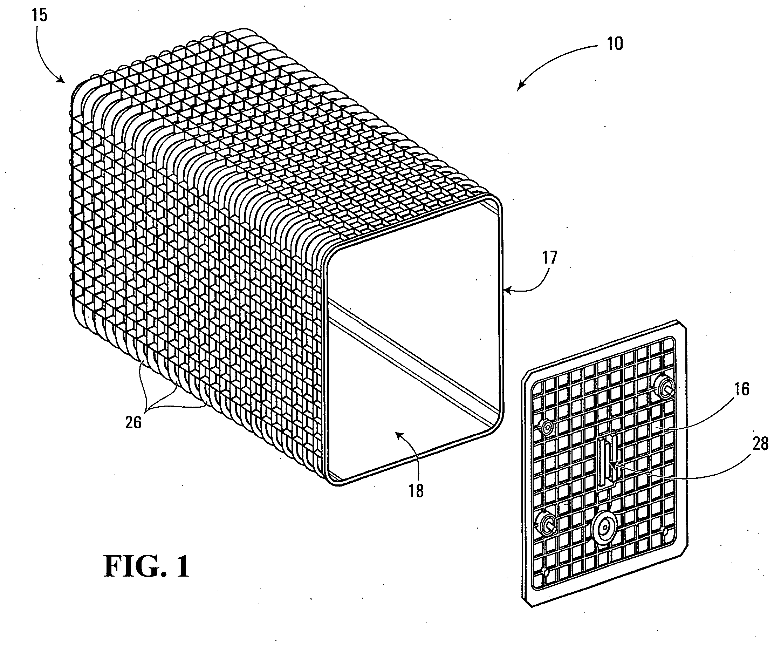

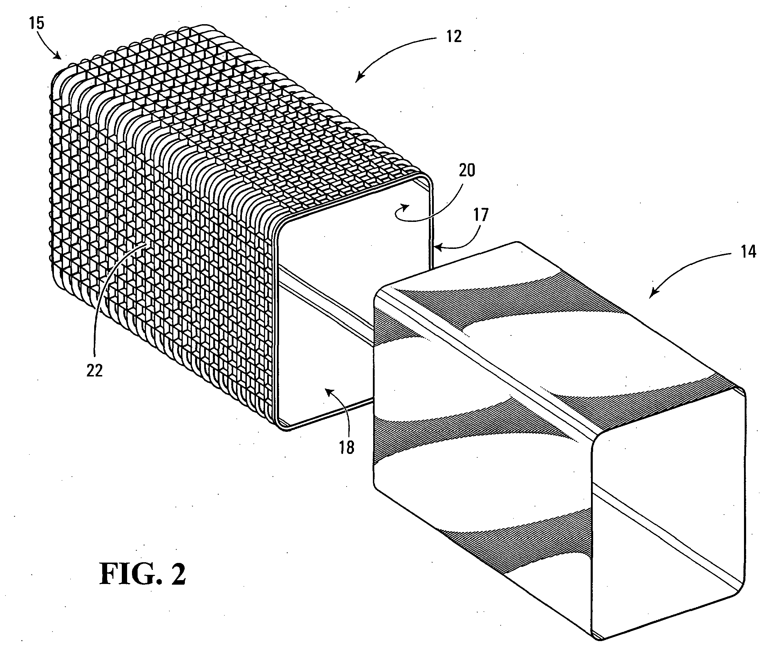

Figures 1 and 2 illustrate a casing for an energy storage device, constructed in accordance with a non-limiting example of implementation of the present invention. The casing 10 includes a molded structural shell 12, an inner lining 14 and an end cover 16. Structural shell 12 defines a space or void area 18, which in this example is rectangular in shape, suitable for containing an energy storage device (not shown in the Figures). The shell 12 has an inner surface 20 and an outer surface 22. As illustrated, the design of outer surface 22 of the structural shell 12 provides a series of ribs 26 to reinforce and rigidify the shell 12 while minimizing weight. The structural shell 12 must be sufficiently strong to protect the energy storage device inside against shocks, impacts and abusive treatments. In the example shown, the inner surface 20 of structural shell 12 is a smooth surface. As illustrated in Figure 2, the structural shell 12 is preferably closed at one end 15 and opened at the other end 17 to allow insertion of the energy storage device inside the casing 10. The structural shell 12 is made of molded plastic material having the requisite strength characteristics such as polybutylene theraphthalate (PBT), polyethylene, polyethylene theraphthalate (PET) polyamide, polypropylene, polyvinyl chloride (PVC) or acrylonitrile butadiene styrene (ABS), amongst other possibilities.

Inner lining 14 is formed of a layer of material which is substantially impervious or impermeable to oxygen, nitrogen and water particles in order to meet the permeability requirements. The inner lining 14 may be a barrier film adhered to the inner surface 20 of structural shell 12; or a second layer of polymer material layered onto the inner surface 20 of structural shell 12 via co-extrusion, co-injection molding or coating techniques; or a coating of substantially impermeable material spray painted onto the inner surface 20 of structural shell 12; or a thermoformed bag inserted into the structural shell 12. In the specific example illustrated in Figure 2, inner lining 14 is a barrier film over which is molded structural shell 12. The barrier film may be a single layer of material or a laminate made of a combination of two or more polymer materials layered one on top of the other, to meet the permeability requirements. The multi-layer laminate film may comprise a layer of ethylene vinyl alcohol (EVOH) and/or polyvinyl alcohol, both highly impermeable to oxygen, and a layer of polyvinylidene chloride (PVDC) and/or polychlorotrifluoroethylene (PCTFE), both highly impermeable to water vapor, among other possibilities. The multi-layer laminate film may further comprise a layer of metallic foil such as aluminum foil to further increase the impermeability of the barrier film.

In one specific method of manufacturing the casing 10 illustrated in Figures 1 and 2, the barrier film or inner lining 14 is shaped like a bag and positioned over the inner portion or core of a mold. The mold is closed and the plastic material is injected into the mold to form a structural shell 12 over the bag-like inner lining 14, wherein the inner lining 14 adheres and conforms to the inner contours of the structural shell. When using a laminate in sheet form as the barrier film, the laminate is first folded somewhat like a grocery paper bag before being positioned over the core of a mold. The laminate sheet is preferably cut, folded and glued or melted at the seams to form an inner lining 14 shaped like a grocery bag which is eventually positioned over the inner portion or core of the mold to produce the casing 10.

In the non-limiting example of implementation shown in Figure 1, casing 10 comprises an end cover 16, which is also a molded plastic part reinforced with a series of ribs. The end cover 16 also comprises an inner lining (not shown) consisting of a layer of impermeable material. Once the energy storage device is inserted into the structural shell 12/inner lining 14 assembly, the end cover 16 is hermetically joined to the structural shell 12, for instance, by way of a welding operation such as vibration welding, induction welding, ultrasonic welding or laser welding, among other possibilities. In the specific example shown, the end cover 16 comprises an opening to accommodate a sealed electrical connector 28 used for connecting the energy storage device and/or the electronic monitoring systems associated with the energy storage device. The electrical connector 28 is hermetically sealed against oxygen, nitrogen and water penetration by any means known to those skilled in the art.

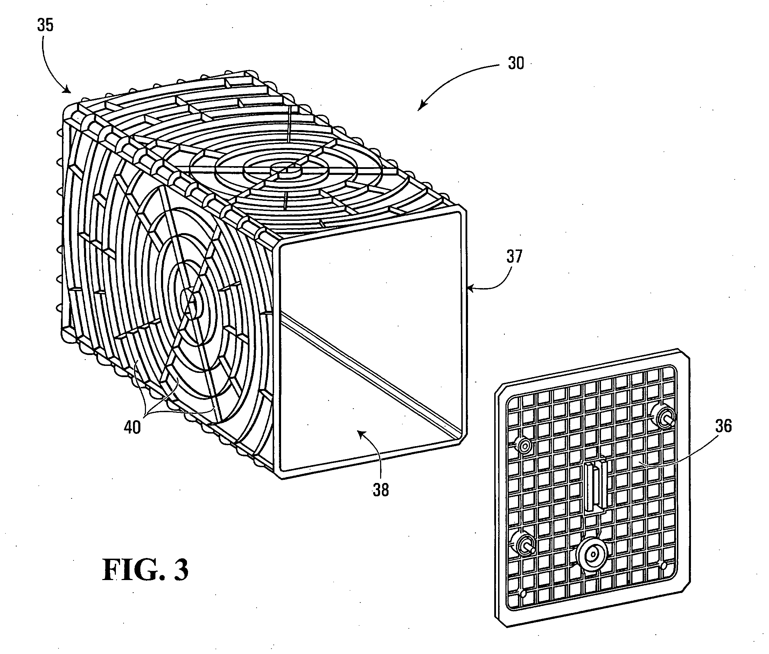

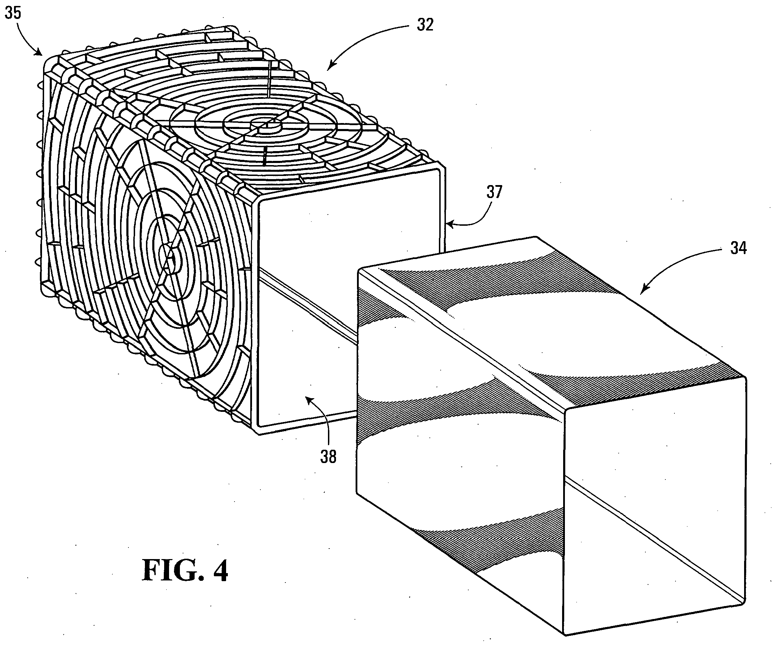

Figures 3 and 4 illustrate another specific embodiment of the casing for an energy storage device, constructed in accordance with a non-limiting example of implementation of the present invention. The casing 30 includes a molded structural shell 32, an inner lining 34, and an end cover 36. Structural shell 32 defines a space or void area 38, which in this example is rectangular in shape, suitable for containing an energy storage device (not shown in the Figures). As illustrated, the design of the outer surface of the structural shell 32 provides a series of reinforcement ribs 40, which have a circular pattern as opposed to the squared design of structural shell 12 illustrated in Figures 1 and 2. The circular pattern of reinforcement ribs 40 enables to maintain sufficient rigidity while further minimizing the weight of the casing 30. The structural shell 32 is sufficiently strong to protect the energy storage device inside against shocks, impacts and abusive treatments. As illustrated in Figures 3 and 4, casing 30 is basically identical to casing 10 with the exception of the reinforcement ribs pattern. In this particular example, the structural shell 32 is closed at one end 35 and opened at the other end 37 to allow insertion of the energy storage device and is made of molded plastic material having the requisite strength characteristics, such polybutylene theraphthalate (PBT), polyethylene, polyethylene theraphthalate (PET) polyamide, polypropylene, polyvinyl chloride (PVC), acrylonitrile butadiene styrene (ABS), or a blend of PolyPhenylene Ether and Polystyrene (PPE+PS) such as Noryl®, amongst other possibilities.

The inner lining 34 is formed of a layer of material which is substantially impervious or impermeable to oxygen, nitrogen and water particles in order to meet the permeability requirements. The inner lining 34 may be a barrier film adhered to the inner surface of structural shell 32; or a second layer of polymer material layered onto the inner surface of structural shell 32 via co-extrusion, co-injection molding or coating techniques; or a coating of impermeable material spray painted onto the inner surface of structural shell 32; or a thermoformed bag inserted into the structural shell 12. In the specific example illustrated in Figure 4, inner lining 34 is a barrier film over which is molded structural shell 32. The barrier film may be a single layer of material or a laminate made of a combination of two or more polymer materials layered one on top of the other, to meet the permeability requirements. The multi-layer laminate film may comprise a layer of ethylene vinyl alcohol (EVOH) and/or polyvinyl alcohol, both highly impermeable to oxygen, and a layer of polyvinylidene chloride (PVDC) and/or polychlorotrifluoroethylene (PCTFE), both highly impermeable to water vapor, among other possibilities. Liquid Crystal Polymer (LCP) may also be used as an impermeable layer. The multi-layer laminate film may further comprise a layer of metallic foil such as aluminum foil to further increase the impermeability of the barrier film. The inner lining 34 is assembled into structural shell 32 in the same manner as previously described in connection with casing 10.

According to a variant method of manufacturing the casing for an energy storage device, discrete reinforcement metallic portions may be provided on the outer portion of the mold prior to closing the mold. The plastic material is injected into the mold and the discrete reinforcement metallic portions are anchored to the structural shell. Alternatively, discrete reinforcement metallic portions may be embedded into the molded structural shell.

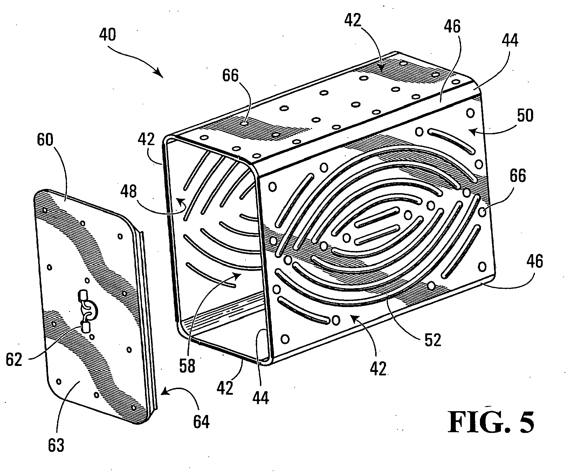

Figure 5 illustrates a non-limiting example of implementation of a casing 40, in which discrete reinforcement metallic portions 42 are anchored to molded shell 44 thereby reinforcing the plastic or polymer shell 44 to form a structural shell 50. In this particular embodiment, structural shell 50 is formed of four discrete flat portions 42 adapted to reinforce the walls of casing 40. The discrete portions 42 are arranged to reinforce the flat walls of casing 40 and to leave a gap 46 between each pair of adjacent discrete portions 42 at each corner of the rectangular casing 40. As previously described, an inner lining 48 is adhered to the inner surface of structural shell 50. The inner lining 48 may be a barrier film; or a second layer of polymer material layered onto the inner surface of structural shell 50 via co-extrusion, co-injection molding or extrusion coating techniques; or a coating of impermeable material sprayed onto the inner surface of structural shell 50. In the specific example shown in Figure 5, inner lining 48 is a barrier film over which is molded the plastic or polymer shell 44. The barrier film may be a single layer of material or a laminate made of a combination of two or more polymer materials layered one on top of the other, to meet the permeability requirements. The multi-layer laminate film may comprise a layer of ethylene vinyl alcohol (EVOH) and/or polyvinyl alcohol, both highly impermeable to oxygen, and a layer of polyvinylidene chloride (PVDC) and/or polychlorotrifluoroethylene (PCTFE), both highly impermeable to water vapor, among other possibilities. The multi-layer laminate film may further comprise a layer of metallic foil such as aluminum foil to further increase the impermeability of the barrier film.

The casing 40 includes a plurality of fasteners 66, which are provided to retain or anchor the discrete reinforcement metallic portions 42 to the molded plastic or polymer shell 44. Each fastener 66 includes a recess and a mating projection. In the example shown in Figure 5, the recess of each fastener 66 is formed on the metallic portions 42, while the mating projection is formed on the molded plastic or polymer shell 44. Alternatively, the recess of a fastener 66 can be formed on the molded plastic or polymer shell 44, and the mating projection on the metallic portions 42. As illustrated in Figure 5, the recesses of the fasteners 66 are formed by apertures and/or perforations in the discrete portions 42. In the molding process, these recesses are at least partially filled with the plastic or polymer material of the molded shell 44. This particular embodiment of the invention provides ease of stamping of the discrete metallic portions 42 and ease of design of the mold for assembling and manufacturing the casing 40. Note that the casing 40 is not limited to any particular number of fasteners 66, nor to any specific distribution of fasteners 66. As shown in Figure 5, the discrete reinforcement metallic portions 42 are provided with a series of ribs 52, which further increase the rigidity of the reinforcement portions 42 and therefore of the structural shell 50, thus preventing excessive deformation of the casing 40 during operation or abusive handling of the energy storage device. In the illustrated embodiment, the ribs 52 are curvilinear, for increasing the rigidity of the central portion of metallic portions 42. However, it will be appreciated that other rib designs are also possible to effectively rigidify the discrete reinforcement metallic portions 42 according to the strength requirements of the casing 40 without departing from the spirit and scope of the invention.

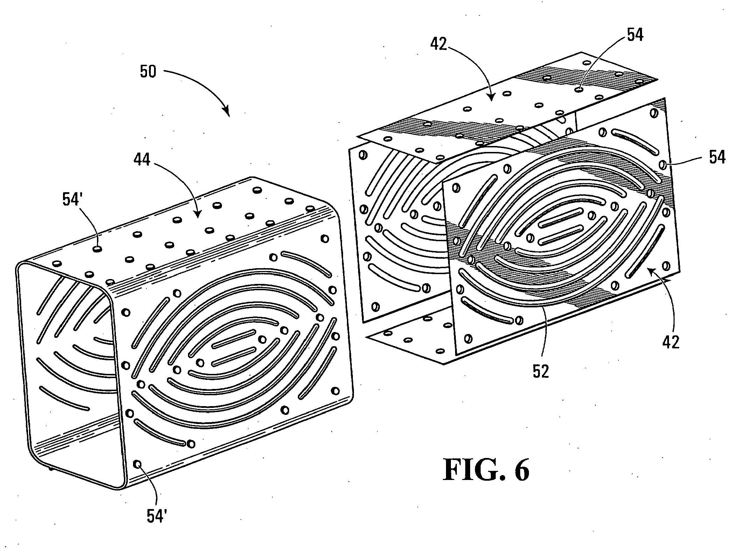

With reference to the exploded view of Figure 6, in this specific non-limiting example of implementation, the recesses are defined by apertures 54, also referred to as perforations, formed in discrete portions 42. The mating projection of each fastener 66 is a protuberance 54' formed in the molded shell 44. Thus, the protuberances 54' engage and at least partially fill corresponding apertures 54 in the discrete portions 42. In a specific example, each protuberance 54' has an enlarged head to prevent separation of the protuberance 54' and the corresponding aperture 54. The apertures 54 and protuberances 54' of the fasteners 66 are not limited to any particular size, shape or distribution.

In a non-limiting example of the method of manufacturing the casing 40 seen in Figures 5 and 6, the discrete portions 42 are placed into a die in the configuration of structural shell 50, where the discrete portions 42 already include the above-described ribs 52 and perforations 54. When arranged in the die, the discrete portions 42 are spaced apart, such that gaps are provided between adjacent discrete portions 42. Next, the plastic or polymer is injected into the mold. The plastic or polymer material in fluid state is deposited in the form of a shell 44 onto the inner surface of each discrete portions 42 and the fasteners 66 are formed by the fluid plastic that invades the recesses 54 of the discrete portions 42. More specifically, the plastic or polymer material enters and at least partially fills perforations 54 of the discrete portions 42, thus forming the protuberances 54'. Once the molding process is complete, the plastic or polymer material of the molded shell 44 is solidified and solidly anchored in the perforations 54. Thus, the molded shell 44 and the discrete portions 42 are anchored together to form the structural shell 50. As Illustrated in Figure 6, in the injection molding process, the plastic or polymer material also conforms to the contours of the ribs 52 and fills the gaps between each discrete portions 42.

As shown in Figure 5, the structural shell 50 has an opening 58 at one end thereof, for receiving the energy storage device to be contained in the void area defined by structural shell 50. The casing 40 includes an end cover 60 adapted to be mounted to the structural shell 50, for hermetically closing the opening 58, and thus the casing 40. In the embodiment shown, the end cover 60 is provided with an electrical connector 62 for connecting an energy storage device contained within the casing 40 to a remote device, such as a load or a power source. Alternatively, the end cover 60 may include several electrical connectors 62, for connecting to one or more remote devices. Optionally, one of the walls of the casing 40 may be provided with the one or more electrical connectors 62.

Many different types of electrical connectors 62 exist and are well known within the field of casings for energy storage devices. In the present invention, the casing 40 is not limited to any particular type of electrical connector 62. Accordingly, since the type and specific operation of electrical connector 62 is not critical to the success of the present invention, the electrical connector 62 will not be described in further detail.

In the example shown in Figure 5, the end cover 60 is formed of a substantially planar, rectangular end plate 63. The end plate 63 is made of any suitable material that has the requisite strength and mechanical characteristics. In a specific example, the end plate 63 is made of the same material as the reinforcement discrete metallic portions 42, for example aluminum, aluminum alloy, or steel.

The end cover 60 has a void-facing surface on which is molded a lining of synthetic material 64, such as plastic or polymer. In a specific example, the material of the lining 64 is the same material as that of plastic or polymer shell 44. In the example shown in Figure 5, this lining 64 completely covers the void-facing surface of end cover 60. Furthermore, the end cover 60 also includes a barrier film made of one or more layers of material substantially impervious or impermeable to oxygen, nitrogen and water particles which adheres to plastic or polymer lining 64 in order to properly seal the energy storage device inside casing 40. In a specific example, the plastic or polymer lining 64 forms a border on the void-facing surface of the end cover 60, along the perimeter of the end plate 63, and fasteners are used to retain the lining 64 to the end plate 63.

During mounting of end cover 60 onto the structural shell 50, the lining 64 on the end cover 60 is affixed to the molded plastic or polymer shell 44. In a specific example, the lining 64 is welded to molded plastic or polymer shell 44, where the welding operation may be performed using vibration welding, induction welding, ultrasonic welding or laser welding, among many other possibilities. At the end of this welding operation, the lining 64 and the molded plastic or polymer shell 44 are joined along their edges and form a seal. End cover 60 may also be affixed to structural shell 50 using a gasket and fasteners or adhesives, or both.

Although not shown in Figure 5, the structural shell 50 may have a second opening 58 that is located at the opposite end of structural shell 50. Thus, the energy storage device to be contained in the casing 40 may be inserted inside via either one of the openings 58 located at either end of the structural shell 50. In this case, a second end cover 60 is provided to close the second opening 58. Note that, in a specific example, only one of the two end covers 60 includes an electrical connector 62, such that connection between the energy storage device contained within the casing 40 and a remote device only occurs at one end of the casing 40.

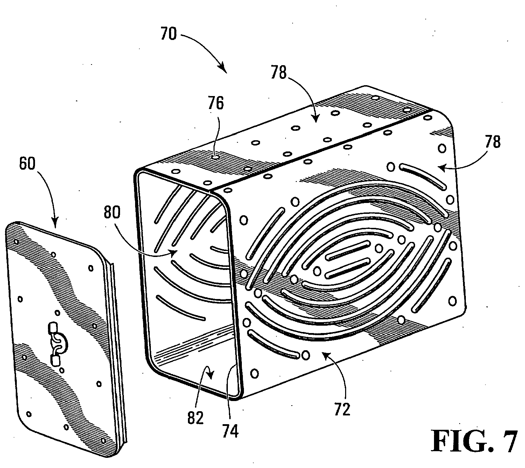

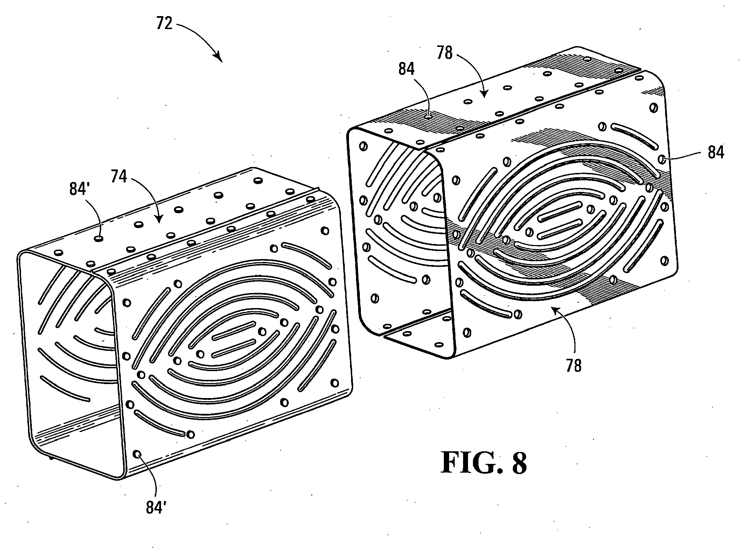

Figures 7 and 8 illustrate yet another embodiment of a casing 70 suitable for containing an energy storage device according to the present invention. As shown in Figures 7 and 8, the structural shell 72 is formed of a molded plastic or polymer inner shell 74 reinforced with two discrete, C-shaped metallic portions 78. The portions 78 are arranged to define a void area 80, which in this example is rectangular in shape. Note that the discrete portions 78 of the structural shell 72 are not directly attached to each other. Rather, in the specific example shown in Figures 7 and 8, the portions 78 are arranged such as to leave a gap between them for ease of fabrication and tolerance control. Although in the example of Figures 7 and 8, the C-shaped discrete portions 78 are substantially identical, the different discrete portions 78 forming the structural shell 72 may alternatively be distinct in size and/or shape.

The inner shell 74 is molded on the inner surface of the C-shaped discrete portions 78, and serves to anchor the discrete portions 78 together in the particular arrangement of structural shell 72. The inner shell 74 is made of any suitable plastic or polymer material that has the requisite strength characteristics. In a similar fashion as described for casing 40 illustrated in Figures 5 and 6, the casing 70 includes a plurality of fasteners 76, which are provided to retain or anchor the C-shaped reinforcement metallic portions 78 to the molded plastic or polymer shell 74. Each fastener 76 includes a recess and a mating projection. The discrete portions 78 are placed into a die or mold in the configuration of structural shell 72, where these discrete portions 78 already include perforations 84. When arranged in the die, the discrete portions 78 are spaced apart, such that gaps are provided between adjacent discrete portions 78. Next, the plastic or polymer material is injected into the mold. The plastic or polymer material in fluid state is deposited in the form of a shell 74 onto the inner surface of each discrete portions 78 and the fasteners 76 are formed by the fluid plastic that invades the recesses 84 of the discrete portions 78. More specifically, the plastic or polymer material enters and at least partially fills perforations 84 of the discrete portions 78, thus forming the protuberances 84'. Once the molding process is complete, the plastic or polymer material of the molded shell 74 is solidified and solidly anchored in the perforations 84. Thus, the molded shell 74 and the discrete portions 78 are anchored together to form the structural shell 72.

As previously described, the inner shell 74 may further comprise an inner lining 82 adhered to the inner surface of structural shell 72. The inner lining 82 may be a barrier film; or a second layer of polymer material layered onto the inner surface of structural shell 72 via co-extrusion, co-injection molding or extrusion coating techniques; or a coating of impermeable material sprayed onto the inner surface of structural shell 72. In the specific embodiment shown in Figure 7, inner lining 82 is a barrier film over which is molded the plastic or polymer shell 74. The barrier film may be a single layer of material or a laminate made of a combination of two or more polymer materials layered one on top of the other, to meet the permeability requirements. The multi-layer laminate film may comprise a layer of ethylene vinyl alcohol (EVOH) and/or polyvinyl alcohol, both highly impermeable to oxygen, and a layer of polyvinylidene chloride (PVDC) and/or polychlorotrifluoroethylene (PCTFE), both highly impermeable to water vapor, among other possibilities. The multi-layer laminate film may further comprise a layer of metallic foil such as aluminum foil to further increase the impermeability of the barrier film.

In a variation of the inner lining 82, the barrier film or laminate may be encapsulated into a distinct plastic layer that is chemically compatible with the plastic or polymer shell 74. The encapsulation would prevent potential delamination of the barrier film or laminate due to poor adhesion between the barrier film and the plastic or polymer shell 74, as well as unwanted reactions of the barrier film or laminate with the ambient air.

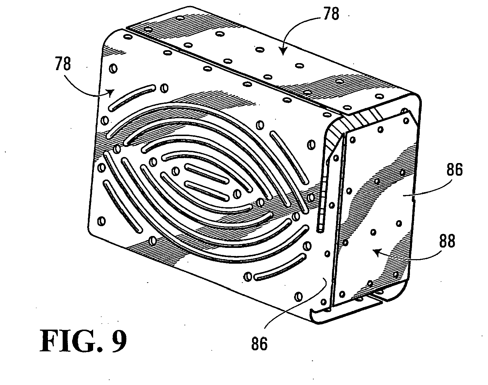

In a variant example of implementation of casing 70 shown in Figure 9, each C-shaped discrete portion 78 of the structural shell 72 includes an integral end plate portion 86. Once arranged in the shell configuration, the end plate portions 86 of the discrete portions 78 cooperate to form a reinforcement wall 88 at one end of the structural shell 72 such that the plastic or polymer shell 74 would also be molded to the inner surface of the reinforcement wall 88, thereby sealing one end of the casing 70. Fasteners 76 may be used to retain the plastic or polymer shell 74 to the wall 78. Thus, in this variant example of implementation, only one end cover is required for the casing 70.

In another possible variant example of implementation, the molded plastic or polymer shell 74 may be an outer shell, molded on the outer surface of the structural shell 72 as opposed to on its inner surface thereby having the discrete metallic portions 78 forming the inner walls of the casing 70. In this embodiment, an electrically insulating barrier is necessary for the operation of the electrical storage device. As with the previously described embodiment in which the molded plastic shell forms the inner surface of the structural shell, an impermeable barrier film is also required which may be positioned on the inner surface of discrete metallic portions 78 forming the inner walls of the casing 70 or between the discrete metallic portions 78 and the outer molded plastic or polymer shell 74 to meet the permeability requirements of the casing.

In yet another embodiment of the invention, the structural shell is made of composite thermoset material, such as epoxy or urethane, reinforced with either strengthening additives like carbon or glass fillers, ribs incorporated into the structural shell design, or with a plurality of discrete metallic portions embedded into the composite thermoset shell.

Although various embodiments have been illustrated, this was for the purpose of describing, but not limiting, the invention. Various modifications will become apparent to those skilled in the art and are within the scope of this invention, which is defined by the attached claims.

## Claims

1. An energy storage device casing (10, 30, 40, 70) for an energy storage device, comprising:
a) a rigidified molded structural shell (12, 32, 50, 72) defining a void area (18, 38) suitable for containing an energy storage device, said structural shell having an outer surface (22) and an inner surface (20); and
b) an inner lining (14, 34, 48, 82) impervious to oxygen and humidity, **characterized in that** said inner lining includes a laminate comprising a layer of synthetic material and a layer of metallic material joined onto said inner surface of said rigidified molded structural shell.

2. An energy storage device casing as defined in claim 1, wherein said rigidified molded structural shell (12, 32, 50, 72) is made of reinforced plastic or reinforced polymer material.

3. An energy storage device casing as defined in claim 2, wherein said molded plastic or polymer material are reinforced with a series of ribs (26, 40) extending over said outer surface (22) of said rigidified molded structural shell (12, 32, 50, 72).

4. An energy storage device casing as defined in claim 2, wherein said molded plastic or polymer material are reinforced with carbon or glass additives.

5. An energy storage device casing as defined in claim 2, wherein said molded plastic or polymer material are reinforced with a plurality of discrete metallic portions (42, 78).

6. An energy storage device casing as defined in claim 5, wherein said plurality of discrete metallic portions (42, 78) and said plastic material are molded together.

7. An energy storage device casing as defined in claim 5, wherein said plurality of discrete metallic portions (42, 78) are embedded in said plastic material.

8. An energy storage device casing as defined in claim 5, wherein said plurality of discrete metallic portions (42, 78) are mated to said plastic material by a plurality of fasteners (66, 76), each fastener including a recess (54, 84) formed on one of said discrete metallic portion and said plastic material and a mating projection (54', 84') formed on the other of said discrete metallic portion and said plastic material.

9. An energy storage device casing as defined in claim 8, wherein the recess of each fastener (66, 76) is defined by a perforation (54, 84) in one of said discrete metallic portions, the mating projection (54', 84') of each fastener being formed by said plastic material filling at least in part the perforation.

10. An energy storage device casing as defined in claim 9, wherein the mating projection (54', 84') of each fastener (66, 76) has an enlarged head to prevent separation of the mating projection and the corresponding recess (54, 84) of the fastener.

11. An energy storage device casing as defined in claim 1, wherein said rigidified molded structural shell (12, 32, 50, 72) includes an aperture (58) opening into said void area for receiving the energy storage device, said casing further comprising an end cover (16, 36, 60) mounted to said rigidified molded structural shell and closing said aperture.

12. An energy storage device casing as defined in claim 11, wherein said end cover (16, 36, 60) is affixed to said rigidified molded structural shell by a welding operation selected from the group consisting of vibration welding, induction welding, ultrasonic welding, and laser welding.

13. An energy storage device casing as defined in claim 11, wherein said end cover (16, 36, 60) includes at least one electrical connector (62) for connecting the energy storage device inside said casing to a remote device.

14. An energy storage device casing as defined in claim 11, wherein said end cover (16, 36, 60) includes a reinforcement metallic portion lined at least in part with a synthetic material.

15. An energy storage device casing as defined in claim 1 wherein said rigidified molded structural shell (12, 32, 50, 72) is made of a material selected from the group consisting of polybutylene theraphthalate (PBT), polyethylene, polyethylene theraphthalate (PET) polyamide, polypropylene, polyvinyl chloride (PVC) and acrylonitrile butadiene styrene (ABS), combinations thereof, and PolyPhenylene Ether and Polystyrene blend (PPE+PS).

16. An energy storage device casing as defined in claim 1, wherein said rigidified molded structural shell (12, 32, 50, 72) is made of thermoset material selected from the group consisting of epoxy and urethane or combinations thereof.

17. An energy storage device comprising the casing (10, 30, 40, 70) defined in claim 1.

## Patentansprüche

1. Energiespeichervorrichtungsgehäuse (10, 30, 40, 70) für eine Energiespeichervorrichtung, das aufweist:
a) eine versteifte Formstrukturhülle (12, 32, 50, 72), die einen Hohlraumbereich (18, 38) definiert, der dazu geeignet ist, eine Energiespeichervorrichtung zu enthalten, wobei die Strukturhülle eine äußere Fläche (22) und eine innere Fläche (20) aufweist; und
b) eine gegenüber Sauerstoff und Feuchtigkeit undurchlässige, innere Auskleidung (14, 34, 48, 82), **dadurch gekennzeichnet, dass** die innere Auskleidung einen eine Schicht eines synthetischen Materials und eine Schicht eines Metallmaterials aufweisenden Schichtverbund beinhaltet, der mit der inneren Fläche der versteiften Formstrukturhülle verbunden ist.

2. Energiespeichervorrichtungsgehäuse nach Anspruch 1, wobei die versteifte Formstrukturhülle (12, 32, 50, 72) aus einem verstärktem Kunststoff- oder einem verstärkten Polymermaterial hergestellt ist.

3. Energiespeichervorrichtungsgehäuse nach Anspruch 2, wobei das Kunststoff- oder Polymerformmaterial mit einer Reihe von Rippen (26, 40) verstärkt ist, die sich über die äußere Fläche (22) der versteiften Formstrukturhülle (12, 32, 50, 72) erstrecken.

4. Energiespeichervorrichtungsgehäuse nach Anspruch 2, wobei das Kunststoff- oder Polymerformmaterial mit Kohlenstoff- oder Glaszusätzen verstärkt ist.

5. Energiespeichervorrichtungsgehäuse nach Anspruch 2, wobei das Kunststoff- oder Polymerformmaterial mit einer Mehrzahl von diskreten Metallteilen (42, 78) verstärkt ist.

6. Energiespeichervorrichtungsgehäuse nach Anspruch 5, wobei die Mehrzahl von diskreten Metallteilen (42, 78) und das Kunststoffmaterial aneinander angeformt sind.

7. Energiespeichervorrichtungsgehäuse nach Anspruch 5, wobei die Mehrzahl von diskreten Metallteilen (42, 78) in das Kunststoffmaterial eingebettet ist.

8. Energiespeichervorrichtungsgehäuse nach Anspruch 5, wobei die Mehrzahl von diskreten Metallteilen (42, 78) durch eine Mehrzahl von Befestigungselementen (66, 76) an das Kunststoffmaterial gepasst ist, wobei jedes Befestigungselement eine Vertiefung (54, 84), die entweder an dem diskreten Metallteil oder an dem Kunststoffmaterial ausgebildet ist, und einen Passvorsprung (54', 84') beinhaltet, der an dem anderen des diskreten Metallteils und des Kunststoffmaterials ausgebildet ist.

9. Energiespeichervorrichtungsgehäuse nach Anspruch 8, wobei die Vertiefung jedes Befestigungselements (66, 76) durch eine Perforierung (54, 84) in einem der diskreten Metallteile definiert ist, wobei der Passvorsprung (54', 84') jedes Befestigungselements dadurch ausgebildet ist, dass das Kunststoffmaterial die Perforierung zumindest zum Teil füllt.

10. Energiespeichervorrichtungsgehäuse nach Anspruch 9, wobei der Passvorsprung (54', 84') jedes Befestigungselements (66, 76) einen vergrößerten Kopf aufweist, um eine Trennung des Passvorsprungs und der entsprechenden Vertiefung (54, 84) des Befestigungselements zu verhindern.

11. Energiespeichervorrichtungsgehäuse nach Anspruch 1, wobei die versteifte Formstrukturhülle (12, 32, 50, 72) eine Öffnung (58) beinhaltet, die sich in den Hohlraumbereich öffnet, um die Energiespeichervorrichtung aufzunehmen, wobei das Gehäuse ferner eine Endabdeckung (16, 36, 60) aufweist, die an der versteiften Formstrukturhülle angebracht ist und die Öffnung verschließt.

12. Energiespeichervorrichtungsgehäuse nach Anspruch 11, wobei die Endabdeckung (16, 36, 60) durch einen Schweißvorgang, der aus der aus Vibrationsschweißen, Induktionsschweißen, Ultraschallschweißen und Laserschweißen bestehenden Gruppe gewählt wird, an der versteiften Formstrukturhülle befestigt ist.

13. Energiespeichervorrichtungsgehäuse nach Anspruch 11, wobei die Endabdeckung (16, 36, 60) mindestens einen elektrischen Verbinder (62) zum Verbinden der Energiespeichervorrichtung im Inneren des Gehäuses mit einer entfernt angeordneten Vorrichtung beinhaltet.

14. Energiespeichervorrichtungsgehäuse nach Anspruch 11, wobei die Endabdeckung (16, 36, 60) ein mindestens teilweise mit einem synthetischen Material ausgekleidetes Verstärkungsmetallteil beinhaltet.

15. Energiespeichervorrichtungsgehäuse nach Anspruch 1, wobei die versteifte Formstrukturhülle (12, 32, 50, 72) aus einem Material hergestellt ist, das aus der aus Polybutylenterephthalat (PBT), Polyethylen, Polyethylenterephthalat(PET)-Polyamid, Polypropylen, Polyvinylchlorid (PVC) und Acrylnitrilbutadienstyrol (ABS), Kombinationen von diesen und einem Gemisch aus Polyphenylenether und Polystyrol (PPE+PS) bestehenden Gruppe gewählt wird.

16. Energiespeichervorrichtungsgehäuse nach Anspruch 1, wobei die versteifte Formstrukturhülle (12, 32, 50, 72) aus einem Duroplast hergestellt ist, der aus der aus Epoxid und Urethan oder Kombinationen von diesen bestehenden Gruppe gewählt wird.

17. Energiespeichervorrichtung, die das Gehäuse (10, 30, 40, 70) nach Anspruch 1 aufweist.

## Revendications

1. Boîtier de dispositif de stockage d'énergie (10, 30, 40, 70) pour un dispositif de stockage d'énergie, comprenant :
a) une coque structurelle moulée rigidifiée (12, 32, 50, 72) définissant une zone vide (18, 38) qui convient pour contenir un dispositif de stockage d'énergie, ladite coque structurelle ayant une surface extérieure (22) et une surface intérieure (20) ; et
b) un doublage intérieur (14, 34, 48, 82) imperméable à l'oxygène et à l'humidité,
**caractérisé en ce que** ledit doublage intérieur comprend un stratifié comprenant une couche de matériau synthétique et une couche de matériau métallique jointes sur ladite surface intérieure de ladite coque structurelle moulée rigidifiée.

2. Boîtier de dispositif de stockage d'énergie selon la revendication 1, dans lequel ladite coque structurelle moulée rigidifiée (12, 32, 50, 72) est faite d'une matière plastique renforcée ou d'un matériau polymère renforcé.

3. Boîtier de dispositif de stockage d'énergie selon la revendication 2, dans lequel ladite matière plastique ou ledit matériau polymère moulé est renforcé par une série de nervures (26, 40) s'étendant au-dessus de ladite surface extérieure (22) de ladite coque structurelle moulée rigidifiée (12, 32, 50, 72).

4. Boîtier de dispositif de stockage d'énergie selon la revendication 2, dans lequel ladite matière plastique ou ledit matériau polymère moulé est renforcé par des additifs en carbone ou en verre.

5. Boîtier de dispositif de stockage d'énergie selon la revendication 2, dans lequel ladite matière plastique ou ledit matériau polymère moulé est renforcé par une pluralité de parties métalliques discrètes (42, 78).

6. Boîtier de dispositif de stockage d'énergie selon la revendication 5, dans lequel ladite pluralité de parties métalliques discrètes (42, 78) et ladite matière plastique sont moulées ensemble.

7. Boîtier de dispositif de stockage d'énergie selon la revendication 5, dans lequel ladite pluralité de parties métalliques discrètes (42, 78) est incrustée dans ladite matière plastique.

8. Boîtier de dispositif de stockage d'énergie selon la revendication 5, dans lequel ladite pluralité de parties métalliques discrètes (42, 78) est accouplée à ladite matière plastique par une pluralité d'attaches (66, 76), chaque attache comprenant un creux (54, 84) formé sur l'une parmi ladite partie métallique discrète et ladite matière plastique et une saillie d'accouplement (54', 84') formée sur l'autre parmi ladite partie métallique discrète et ladite matière plastique.

9. Boîtier de dispositif de stockage d'énergie selon la revendication 8, dans lequel le creux de chaque attache (66, 76) est défini par une perforation (54, 84) dans l'une desdites parties métalliques discrètes, la saillie d'accouplement (54', 84') de chaque attache étant formée par ladite matière plastique remplissant au moins une partie de la perforation.

10. Boîtier de dispositif de stockage d'énergie selon la revendication 9, dans lequel la saillie d'accouplement (54', 84') de chaque attache (66, 76) a une tête élargie pour empêcher une séparation de la saillie d'accouplement et du creux correspondant (54, 84) de l'attache.

11. Boîtier de dispositif de stockage d'énergie selon la revendication 1, dans lequel ladite coque structurelle moulée rigidifiée (12, 32, 50, 72) comprend une ouverture (58) s'ouvrant dans ladite zone vide pour recevoir le dispositif de stockage d'énergie, ledit boîtier comprenant en outre un capot (16, 36, 60) monté sur ladite coque structurelle moulée rigidifiée et fermant ladite ouverture.

12. Boîtier de dispositif de stockage d'énergie selon la revendication 11, dans lequel ledit capot (16, 36, 60) est fixé à ladite coque structurelle moulée rigidifiée par une opération de soudage choisie dans le groupe constitué par un soudage par vibrations, un soudage par induction, un soudage aux ultrasons, et un soudage au laser.

13. Boîtier de dispositif de stockage d'énergie selon la revendication 11, dans lequel ledit capot (16, 36, 60) comprend au moins un connecteur électrique (62) pour connecter le dispositif de stockage d'énergie à l'intérieur dudit boîtier à un dispositif distant.

14. Boîtier de dispositif de stockage d'énergie selon la revendication 11, dans lequel ledit capot (16, 36, 60) comprend une partie métallique de renforcement doublée au moins en partie par un matériau synthétique.

15. Boîtier de dispositif de stockage d'énergie selon la revendication 1, dans lequel ladite coque structurelle moulée rigidifiée (12, 32, 50, 72) est faite en un matériau choisi dans le groupe constitué par le poly(téréphtalate de butylène) (PBT), le polyéthylène, le poly(téréphtalate d'éthylène) (PET), le polyamide, le polypropylène, le poly(chlorure de vinyle) (PVC) et l'acrylonitrile-butadiène-styrène (ABS), leurs combinaisons, et un mélange de polyphénylène-éther et de polystyrène (PPE+PS).

16. Boîtier de dispositif de stockage d'énergie selon la revendication 1, dans lequel ladite coque structurelle moulée rigidifiée (12, 32, 50, 72) est faite en un matériau thermodurci choisi dans le groupe constitué par l'époxy et l'uréthane ou leurs combinaisons.

17. Dispositif de stockage d'énergie comprenant le boîtier (10, 30, 40, 70) défini dans la revendication 1.
